# EUROPEAN PATENT SPECIFICATION

(11) **EP 2 922 404 B1**
(45) Date of publication and mention of the grant of the patent: **15.07.2020**
(21) Application number: 13826857.8
(22) Date of filing: 22.11.2013
(51) Int. Cl.: A21D 13/41, A21D 2/38, A21D 10/02, A21D 10/04

(54) **A PACKAGED PRODUCT COMPRISING A LIQUID DOUGH FOR MAKING A BAKERY PRODUCT**
VERPACKTES PRODUKT, ENTHALTEND EINEN FLÜSSIGEN TEIG ZUR HERSTELLUNG EINER BACKWARE
PRODUIT EMBALLÉ COMPRENANT UNE PÂTE LIQUIDE POUR FAIRE UN PRODUIT DE BOULANGERIE

(30) Priority: 26.11.2012 IT BO20120641
(43) Date of publication of application: 30.09.2015
(73) Proprietor: La Pizza + 1 S.p.A., 29027 Podenzano (IT)
(72) Inventor: LUDOVICO, Sante, I-29019 San Giorgio Piacentino (Piacenza) (IT)
(74) Representative: Fanzini, Valeriano
(86) International application number: PCT/IB2013/060333
(87) International publication number: WO 2014/080369

(56) References cited:
- WO-A1-02/11544
- WO-A1-96/39041
- WO-A1-99/64320
- CH-A5- 695 079
- DE-U1-202011 107 231
- US-A- 3 021 220
- US-A- 4 022 917
- US-A1- 2007 286 933

## Description

### Technical field

This invention relates to a packaged product for making flour-based food product.

This food product is in the form of pizza or focaccia.

### Background art

Nowadays, to make a flour-based product, in particular in the form of a pizza, a soft dough is prepared, laid out on baking trays, containers or conveyor belts which hold the product with a view to feeding it along the production line, topped with tomato and mozzarella and other ingredients, if necessary, baked in an oven and then suitably packaged, preferably in a plastic film.

The traditional procedure for preparing these bakery products, however, involves considerable activity for handling the soft dough.

In effect, once the portion of the dough has been measured, it must be placed on a baking tray or conveyor belt, flattened out by means of suitable mechanical means which apply a rolling or similar mechanical operation on the product, involving a considerable mechanical complication, in particular, requiring the provision of excessively long processing lines, or lengthy process times, to perform the operation by which the soft dough is flattened out. Ready-to-use doughs and batters for baking bakery products are known.

WO0211544 discloses a liquid ready-to-use food product including a batter and a leavening agent while in storage in a container and which can be used to produce a baked food product such as a pancake, bread, brownie, muffin, cookie, donut, pastry, pie or cake.

US3021220 discloses the method of making a culinary batter for manufacturing cakes which is capable of being stored for extended periods of time without refrigeration which comprises the steps of forming a homogeneous slurry containing farinaceous material, sugar and aqueous material.

WO9639041 discloses a packaging system for refrigerated leavened compositions.

US4022917 discloses storage stable aqueous batters for use in the preparation of leavened culinary products and in particular bread, biscuits, pancakes, and the like.

US2007286933 discloses a bakable batter mixed using cold process conditions and provided in a pressurized can, that can be used to bake a variety of food products and in particular waffles, pancakes, muffins, cupcakes, ginger bread, cookies and brownies.

According to another aspect, preparations for making pizzas or focaccias in the home are known which comprise, in a single package, the essential ingredients needed to make the pizza or focaccia, and which, in particular, comprise predetermined quantities of flour, leavener and other products, if necessary, to be mixed with a specified quantity of water to obtain a soft dough which must then be rolled out and placed on a baking tray and topped with tomato, mozzarella or other toppings that may be contained in the package. All of this must be done by hand by the consumer.

These known pizza or focaccia packages, however, are not particularly popular with consumers because preparation requires a large number of time-consuming operations. Also, the product obtained is too dry and excessively dense, without air bubbles, and its quality is therefore relatively poor.

Also known are parbaked pizzas and focaccias that simply need to be heated up in the oven. These products tend, however, to lose their flavour if consumed too long after preparation.

Consumers therefore feel the need for a product which allows them to make a bakery product, in particular, pizza and focaccia, quickly and easily.

Consumers also feel the need for a product which allows them to make a bakery product of optimum quality in terms of food safety and organoleptic properties.

### Disclosure of the invention

This invention proposes a novel solution, alternative to the solutions known up to now and which can overcome one or more of the above mentioned drawbacks and/or meet one or more of the needs mentioned in or inferable from the above.

Accordingly provided is a packaged product for making a flour-based food product according to claim1.

It is thus possible to obtain a bakery product, for example pizza or focaccia, quickly and easily, saving a considerable amount of time and effort to prepare the product.

### Brief description of the drawings

These and other innovative aspects are set out in the appended claims and its technical features and advantages are apparent from the detailed description which follows of non-limiting examples of it with reference to the accompanying drawings, in which:
- Figure 1A schematically illustrates the main steps of a first example of the process for making a bakery product (not pertaining to the invention);
- Figure 1B is a block diagram showing the main steps of the first example of the process for making a bakery product;
- Figure 2A schematically illustrates the main steps of a second example of the process for making a bakery product (not pertaining to the invention);
- Figure 2B is a block diagram showing the main steps of the second example of the process for making a bakery product;
- Figure 3A schematically illustrates the main steps of the process for making the packaged product (not pertaining to the invention);
- Figure 3B is a block diagram showing the main steps of the process for making the packaged product (not pertaining to the invention);
- Figure 3C is a schematic view of a preferred embodiment of the packaged product according to this invention.

### Detailed description of preferred embodiments of the invention

The process (not pertaining to the invention) is used to make a flour-based bakery product, in particular a parbaked product, especially in the form of pizza, focaccia or the like.

In this specification, the term "parbaked product" is used to mean a bakery product whose baking is not completed by the process but must be completed by the end consumer, for example in the home.

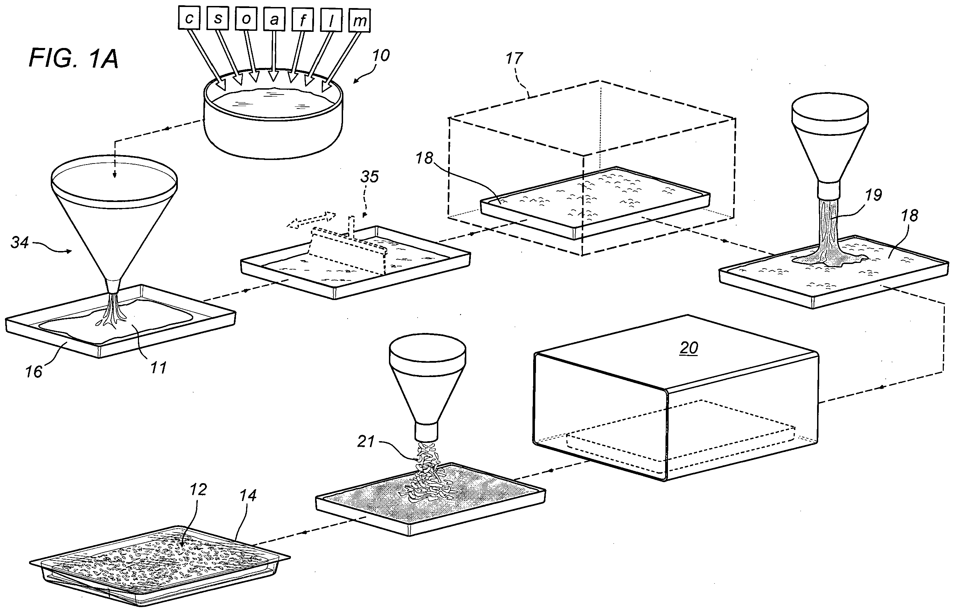

As may be inferred in particular from Figure 1A, the process comprises preparing in a suitable container 10, a dough 11, from which the bakery product 12 is obtained, the dough 11 being, advantageously, in liquid or substantially liquid condition, that is, in the form of a fluid and flowable mass, and in particular, such that when poured onto respective supporting means spreads by gravity in the space at its disposal.

In practice, the viscosity of the dough 11 , measured with a Brookfield rotating viscometer, is between 47,000 mPa*s (cP) and 800 mPa*s (cP), at 50 rpm, with impeller R7 and R3 respectively, or between 36,000 mPa*s (cP) and 600 mPa*s (cP), at 100 rpm, with impeller R7 and R3, respectively, all at a temperature of 20° C.

More specifically, according to this process for obtaining a bakery product, the dough 11 is poured onto a respective support, in particular a baking container or tray 16, to make a respective base 18 from which the bakery product 12 is obtained.

More specifically, the dough 11 contains flour "f", in particular wheat flour, especially soft wheat flour, durum wheat or a mixture of these.

Also, the wheat flour is preferably type "O" flour.

It will be understood, however, that flour made from other cereals, preferably Khorasan, spelt and other grains might also be used.

It will also be understood that flour mixtures, in particular cereal flour mixtures, might also be used.

The dough 11 further comprises water "a" which is in a quantity of between 44.5% and 50.9% by weight of the dough (or in a quantity of between 92% and 110% by weight in proportion to the weight of the flour). Advantageously, the quantity of flour is in turn between 44.5% and 50.5% by weight of the dough.

In particular, the flour has a strength greater than or equal to 220 W measured according to the Chopin alveograph.

Also, leavener "l" is added to obtain this dough.

The leavener is preferably in the form of brewer's yeast, natural yeast, or chemical leavening or a mixture of two or more of these, in particular chosen from those customarily used in the trade.

Preferably and advantageously, the leavener is in a quantity of up to a maximum of 1.8% by weight of the dough (or in a quantity of up to a maximum of 3% by weight in proportion to the weight of the flour) and, more preferably, is in a quantity of between 0.6% and 0.8% by weight of the dough (or in a quantity of between 1.2% and M .7% by weight in proportion to the weight of the flour).

Also, advantageously, salt or sodium chloride "s" is added to obtain this dough. In particular, advantageously, the salt is in a quantity of up to a maximum of 1.8% by weight of the dough (or in a quantity of up to a maximum of 3% by weight in proportion to the weight of the flour) and, more preferably, in a quantity of between 0.5% and 1.8% by weight of the dough (or in a quantity of between 1% and 3% by weight in proportion to the weight of the flour).

Also, preferably, oil and/or cooking fat "o", or a mixture of oils and/or cooking fats, is added to obtain this dough.

Preferably, olive oil, and more preferably, extra virgin olive oil is used. Advantageously, the oil and/or cooking fat is in a quantity of up to a maximum of 5.7% by weight of the dough (or in a quantity of up to a maximum of 10% by weight in proportion to the weight of the flour) and, preferably, is in a quantity of between 1.9% and 3.9% by weight of the dough (or in a quantity of between 4% and 8% by weight in proportion to the weight of the flour).

Preferably, also, malt extract or malted cereal flour "m" is added to obtain this dough. The malt extract or malted cereal flour is in a quantity of up to a maximum of 0.6% by weight of the dough (or in a quantity of up to a maximum of 1% by weight in proportion to the weight of the flour).

The dough preferably also contains a dough enhancer "c". More specifically, the dough enhancer comprises a dried base of acid flour paste, in particular of soft wheat flour, gluten, L-ascorbic acid and alpha-amylase.

More specifically, the dough enhancer is in a quantity less than or equal to 0.6% by weight of the dough (or in a quantity of up to a maximum of 1 % by weight jn proportion to the weight of the flour).

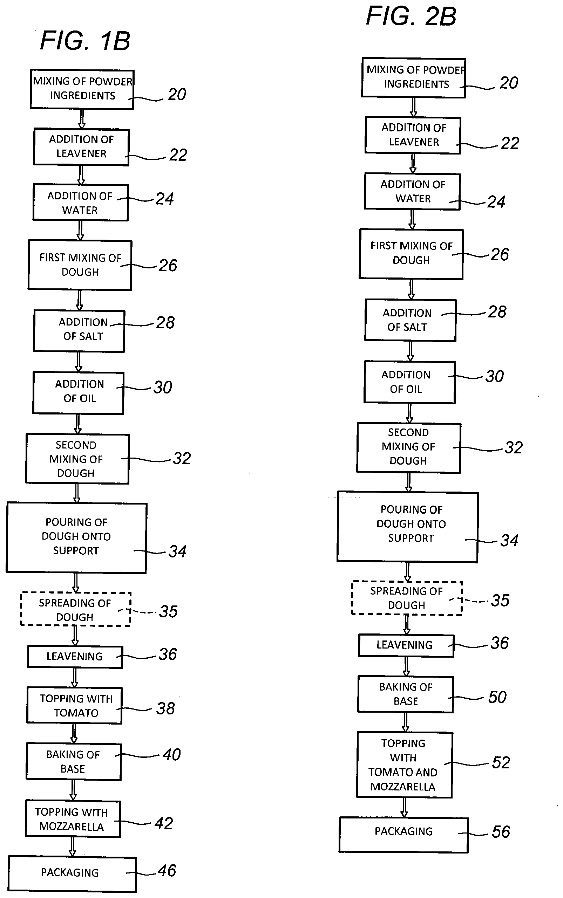

With reference in particular to Figures 1A and 1B, a first preferred process (not pertaining to the invention) for making a bakery product, in particular a pizza, comprises, in the step denoted by the reference numeral 20, mixing the flour with the dough enhancer and the malt and then adding the leavener in the next step 22. In a step 24 following that, water is added and in a step 26 after that, there is a first mixing of the dough.

To the dough thus obtained, salt is added in a step 28, and in a step 30, oil or fat is added. More specifically, olive oil is used, preferably extra virgin olive oil.

In another embodiment, the leavener, water, salt and oil or cooking fat may be added in a single step.

A step 32 following that comprises a second mixing of the dough, to obtain the dough from which the bakery product is made and which is in liquid or substantially liquid condition.

The liquid dough 11 is then poured into a baking tray 16, where it spreads out freely in the containing space delimited by the tray.

In other words, the dough 11 in liquid or substantially liquid condition is such that it does not keep its shape.

As illustrated, the tray 16 comprises, besides the surface of its bottom wall, a plurality of side walls surrounding and containing the dough in the spread out condition defining a product base.

In practice, the dough poured onto the respective support or baking tray adopts a spread-out configuration which defines a product base 18. After being poured, the dough might, in a step 35, if necessary, be spread out by suitable mechanical means to smooth out its surface more evenly. In practice, the step 35 is optional and entails spreading or smoothing out the liquid or substantially dough by a light mechanical action on the corresponding supporting surface of the baking tray 16, preferably consisting of the entire lower or bottom surface of the baking tray.

In a step 36 following that, the base thus obtained is sent to a proofing room 17, where it is allowed to rise, as explained in more detail as this description continues. More specifically, leavening takes place in a suitable room at controlled temperature and humidity, for a length of time of approximately 2 hours.

Next, in a step 38, tomato in a liquid or substantially liquid condition, in particular in the form of a sauce, pulp or puree of tomato, is spread over the top of the base 18.

In Figure 1A, the tomato topping spread on the base 8 is denoted by the numeral 19.

Next, in a step 40, the base 18 with the tomato topping spread on the surface of it is baked in a suitable oven 20'.

Next, in a step 42, a topping preferably even comprising just plain mozzarella in cubes or strips, or in any case pieces of mozzarella, denoted by the numeral 21 is spread on the surface of the base 18. Obviously, in the preparation of products such as focaccia or pizza bases or the like, the step 42 is omitted.

The product might also be sliced before being packaged.

Next, in a step 46, the bakery product is packed in a respective package 14.

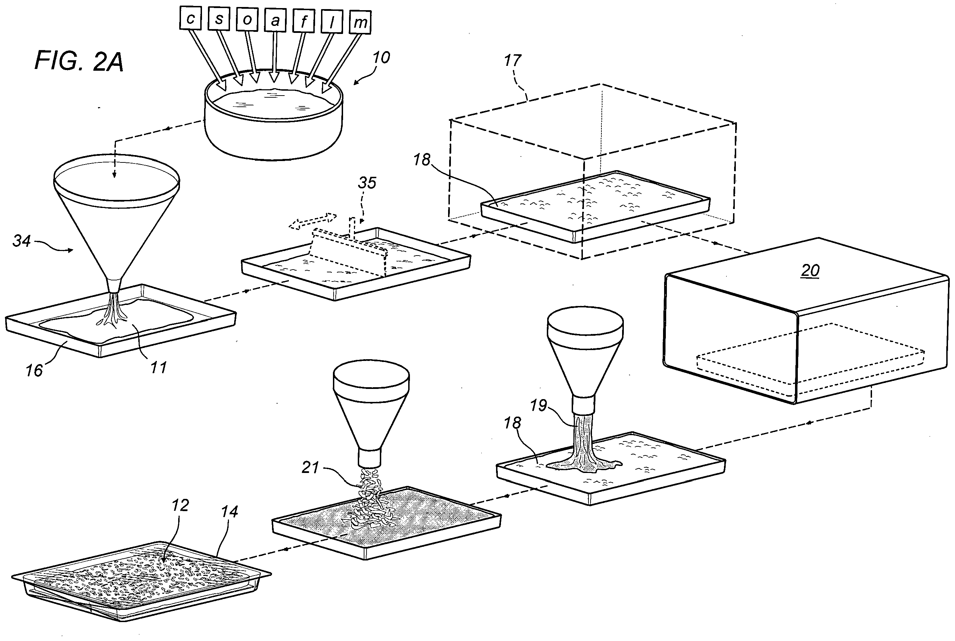

Figures 2A and 2B illustrate a second preferred process (not pertaining to the invention) for making a bakery product, in particular, a pizza, which, is substantially similar to the first preferred process, and whose initial steps will not therefore be described again to avoid making this description excessively lengthy. In practice, up to the leavening step 36, the second preferred process is the same as the first above described preferred process, illustrated in Figures 1A and 1B for making a bakery product just described.

In a step 50 of the second process, the leavened base 18 leaving the proofing room 17 is baked and the plain, parbaked base is topped with the tomato 19 and the mozzarella 21 and other topping ingredients, if any, in a step 52.

Obviously, in the second preferred process too, the product might be sliced before being packaged.

In the next step 56, the pizza or other bakery product is packed in a suitable container 14.

It will be understood, however, that a focaccia might be made in a process comprising steps 20 to 36 followed by a step of topping the surface of the base, for example, with oil, in particular olive oil or extra virgin olive oil and other ingredients, and then a step of baking.

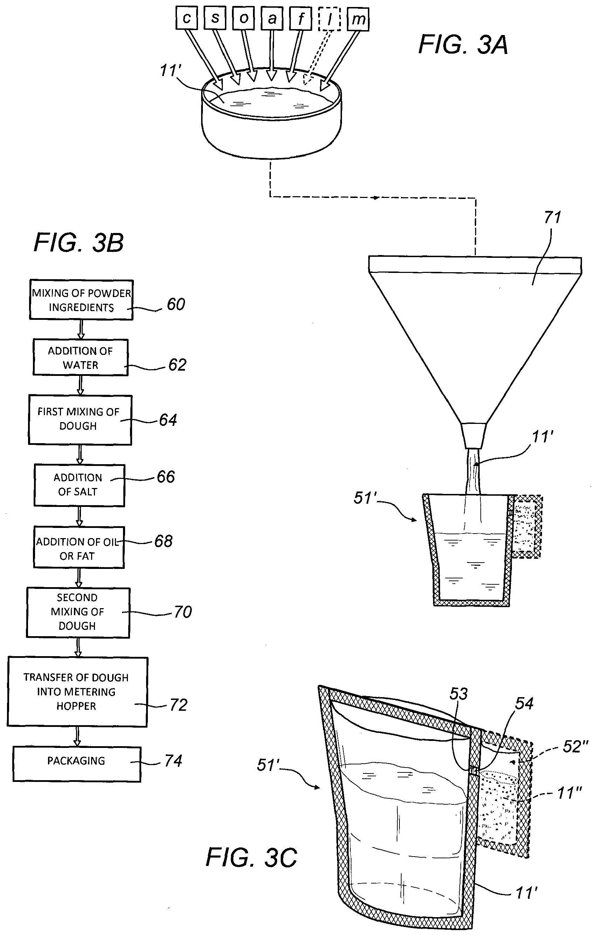

Figure 3C illustrates a packaged product for making a flour-based bakery product, in particular in the form of pizza or focaccia. This packaged product 51 comprises a dough 11' from which the bakery product ca be made and which is, advantageously, in liquid or substantially liquid condition, that is, in a condition such that it cannot keep its shape.

The liquid or substantially liquid dough of the packaged product is obtained by mixing flour, in particular wheat flour, especially soft wheat flour, preferably of type "0" and water, as may be inferred from Figure 3B, which is a block diagram illustrating the process for making this packaged product.

As illustrated, in a step 60, the powder ingredients, comprising flour and, if necessary, malt and the dough enhancer, are mixed together and, after that, water is added in a step 62, and a first mixing of the dough is performed in a step 64.

More specifically, the water is added in a quantity of between 35.5% and 56.5% by weight of the dough (or in a quantity of between 65% and 30% by weight in proportion to the weight of the flour) and is in any case, preferably in a quantity of between 44.5% and 50.9% by weight of the dough (or in a quantity of between 92% and 110% by weight in proportion to the weight of the flour).

The quantity of flour is in turn between 43.5% and 60.6% by weight of the dough from which the bakery product is obtained, and is in any case preferably between 44.5% and 50.5% by weight of the dough.

In particular, the flour has a strength greater than or equal to 220 W measured according to the Chopin alveograph.

The dough enhancer preferably comprises a dried base of acid flour paste, in particular of soft wheat flour, gluten, L-ascorbic acid and alpha-amylase. More specifically, the dough enhancer is in a quantity of up to a maximum of 0.6% by weight of the dough from which the bakery product is obtained (or in a quantity of up to a maximum of 1 % by weight in proportion to the weight of the flour).

Further, the malt extract or malted cereal flour is in a quantity of up to a maximum of 0.6% by weight of the dough from which the bakery product is obtained (or in a quantity of up to a maximum of 1 % by weight in proportion to the weight of the flour).

As illustrated, this is followed by a step 66 where salt, or sodium chloride, is added to the dough, in particular, in a quantity of up to a maximum of 1.8% by weight of the dough (or in a quantity of up to a maximum of 3% by weight in proportion to the weight of the flour) and, preferably, in a quantity of between 0.5% and 1.8% by weight of the dough (or in a quantity of between 1% and 3% by weight in proportion to the weight of the flour). After that, in a step 68, oil is also added to the dough, in particular olive oil, preferably extra virgin olive oil.

In particular, the oil, or cooking fat, is in a quantity of up to a maximum of 5.7% by weight of the dough from which the bakery product is obtained, (or in a quantity of up to a maximum of 10% by weight in proportion to the weight of the flour) and, preferably, is in a quantity of between 1.9% and 3.9% by weight of the dough (or in a quantity of between 4% and 8% by weight in proportion to the weight of the flour).

The step of adding the oil is followed by a step 70 comprising a second mixing of the dough.

As illustrated in Figure 3A, the liquid or substantially liquid dough is then, in a step 72 of the process, transferred to a hopper 71 , and from there poured into a container 51' in a step 74.

The container 51' for the liquid or substantially liquid dough is preferably in the form of a packaging bag.

As illustrated, separate from the liquid or substantially liquid dough 11', the packaged product comprises leavener 11" which can be mixed with the dough 11' in order to make the dough from which the bakery product can be obtained.

In particular, this leavener is in a quantity of up to a maximum of 1.8% by weight of the dough (or in a quantity of up to a maximum of 3% by weight in proportion to the weight of the flour) and, preferably, is in a quantity of between 0.6% and 0.8% by weight of the dough (or in a quantity of between 1.2% and 1 ,7% by weight in proportion to the weight of the flour). More specifically, the leavener is in the form of brewer's yeast.

The user must mix the leavener into the liquid or semiliquid dough 11' to make the dough from which the bakery product can be obtained. Advantageously, the leavener 11" is contained in a suitable container 52". Advantageously, as illustrated, the container 51" for the leavener is in the form of a small bag or compartment attached to or supported by the container 51' which contains the liquid or substantially liquid dough 11'. In a further embodiment, not illustrated in the accompanying drawings, the liquid dough might already contain the leavener and in that case the package would comprise a single container, preferably a bag of the kind illustrated in Figure 3C, containing the liquid dough but without the separate compartment for the leavener.

The preferred processes described above (not pertaining to the invention) will be better understood with the aid of the examples set out below.

### Example 1

Using the method described above, a dough is prepared which comprises soft wheat flour type "O" (W =250), in a quantity of 48.9% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1% in proportion to the weight of the flour) and malt extract or malted cereal flour in a quantity of 0.4% by weight of the dough (or in a quantity of 0.9% in proportion to the weight of the flour).

These powder ingredients are then mixed and brewer's yeast is added in a quantity of 0.8% by weight of the dough (or in a quantity of 1.7% in proportion to the weight of the flour). Water is then added in a quantity of 45% by weight of the dough (or in a quantity of 92% in proportion to the weight of the flour) and mixed in to obtain a liquid or substantially liquid dough to which salt is added in a quantity of 1.5% by weight of the dough (or in a quantity of 3% in proportion to the weight of the flour).

Next, extra virgin olive oil is added in a quantity of 2.9% by weight of the dough (or in a quantity of 6% in proportion to the weight of the flour) and the dough is subjected to a second mixing to obtain a liquid or substantially liquid dough whose consistency, measured with a Brookfield rotating viscometer, is 5500 mPa*s (cP) (50rpm, impeller R5, temperature 20°C).

This liquid dough is then poured into suitable baking trays, and if necessary, smoothed out by light mechanical action in order to completely fill the space delimited by the tray, and allowed to rise in a suitable proofing room in a controlled atmosphere for 2 hours.

After that, a tomato sauce is spread over the top of the dough. The tomato sauce is well supported by the dough and does not sink into it. The dough topped in this way is then baked in a suitable oven.

After that, the dough is again topped, this time with mozzarella in pieces, and baked to completion in a suitable oven.

The result is a pizza with a soft, spongy body, in particular, with alveoli larger than 0.2 cm, and with crunchy edge and bottom. This example 1 is not part of present invention.

### Example 2

Using the method described above, a dough is prepared which comprises soft wheat flour type "0" (W =250), in a quantity of 48.9% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1 % in proportion to the weight of the flour) and malt extract or malted cereal flour in a quantity of 0.4% by weight of the dough (or in a quantity of 0.9% in proportion to the weight of the flour).

These powder ingredients are then mixed and brewer's yeast is added in a quantity of 0.8% by weight of the dough (or in a quantity of 1 ,7% in proportion to the weight of the flour).

Water is then added in a quantity of 45% by weight of the dough (or in a quantity of 92% in proportion to the weight of the flour) and mixed in to obtain a liquid or substantially liquid dough to which salt is added in a quantity of 1.5% by weight of the dough (or in a quantity of 3% in proportion to the weight of the flour).

Next, extra virgin olive oil is added in a quantity of 2.9% by weight of the dough (or in a quantity of 6% in proportion to the weight of the flour) and the dough is subjected to a second mixing to obtain a liquid or substantially liquid dough whose consistency, measured with a Brookfield rotating viscometer, is 5500 mPa*s (50rpm, impeller R5, temperature 20°C).

This liquid dough is then poured into suitable baking trays, and if necessary, smoothed out by light mechanical action in order to completely fill the space delimited by the tray, and allowed to rise in a proofing room at a controlled temperature for 2 hours.

The plain base thus obtained is then baked in a suitable ventilated oven. After that, the dough is topped with a tomato sauce and mozzarella in pieces, and baked to completion.

The result is a pizza with a soft, spongy body, in particular, with alveoli larger than 0.2 cm, and with crunchy edge and bottom. This example 2 is not part of present invention.

### Example 3

Using the method described above, a dough is prepared which comprises soft wheat flour type "O" (W =250), in a quantity of 53.3% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1 % in proportion to the weight of the flour) and malt extract or malted cereal flour in a quantity of 0.5% by weight of the dough (or in a quantity of 0.9% in proportion to the weight of the flour).

These powder ingredients are then mixed and brewer's yeast is added in a quantity of 0.9% by weight of the dough (or in a quantity of 1.7% in proportion to the weight of the flour).

Water is then added in a quantity of 40% by weight of the dough (or in a quantity of 75% in proportion to the weight of the flour) and mixed in to obtain a liquid or substantially liquid dough to which salt is added in a quantity of 1.6% by weight of the dough (or in a quantity of 3% in proportion to the weight of the flour).

Next, extra virgin olive oil is added in a quantity of 3.2% by weight of the dough (or in a quantity of 6% in proportion to the weight of the flour) and the dough is subjected to a second mixing to obtain a liquid or substantially liquid dough.

This liquid dough is then poured into suitable baking trays, and if necessary, smoothed out by light mechanical action in order to completely fill the space delimited by the tray, and allowed to rise in a proofing room in a controlled atmosphere for 2 hours.

After that, a tomato sauce is spread over the top of the dough. The tomato sauce is well supported by the dough and does not sink into it. The dough topped in this way is then baked in a suitable oven.

After that, the dough is again topped, this time with mozzarella in pieces, and baked to completion.

The result is a pizza with a soft, spongy body, in particular, with alveoli larger than 0.2 cm, and with crunchy edge and bottom.

This example 3 is not part of present invention.

### Example 4

Using the method described above, a dough is prepared which comprises soft wheat flour type 'O" (W =250), in a quantity of 54.8% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1% in proportion to the weight of the flour) and malt extract or malted cereal flour in a quantity of 0.5% by weight of the dough (or in a quantity of 0.9% in proportion to the weight of the flour).

These powder ingredients are then mixed and brewer's yeast is added in a quantity of 0.9% by weight of the dough (or in a quantity of 1.7% in proportion to the weight of the flour).

Water is then added in a quantity of 38.3% by weight of the dough (or in a quantity of 70% in proportion to the weight of the flour) and mixed in to obtain a liquid or substantially liquid dough to which salt is added in a quantity of 1.6% by weight of the dough (or in a quantity of 3% in proportion to the weight of the flour).

Next, extra virgin olive oil is added in a quantity of 3.3% by weight of the dough (or in a quantity of 6% in proportion to the weight of the flour) and the dough is subjected to a second mixing to obtain a liquid or substantially liquid dough.

This liquid dough is then poured into suitable baking trays, and if necessary, smoothed out by light mechanical action in order to completely fill the space delimited by the tray, and allowed to rise in a suitable proofing room in a controlled atmosphere for 2 hours.

After that, a tomato sauce is spread over the top of the dough. The tomato sauce is well supported by the dough and does not sink into it. The dough topped in this way is then baked in a ventilated oven at 200°C for 21 minutes.

After that, the dough is again topped, this time with mozzarella in pieces, and baked to completion.

The result is a pizza with a soft, spongy body, in particular, with alveoli larger than 0.2 cm, and with crunchy edge and bottom.

This example 4 is not part of present invention.

### Example 5

Using the method described above, a dough is prepared which comprises soft wheat flour type "0" (W =430), in a quantity of 47.5% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1% in proportion to the weight of the flour) and malt extract or malted cereal flour in a quantity of 0.4% by weight of the dough (or in a quantity of 0.9% in proportion to the weight of the flour).

These powder ingredients are then mixed and brewer's yeast is added in a quantity of 0.8% by weight of the dough (or in a quantity of 1.7% in proportion to the weight of the flour).

Water is then added in a quantity of 46.5% by weight of the dough (or in a quantity of 98% in proportion to the weight of the flour) and mixed in to obtain a liquid or substantially liquid dough to which salt is added in a quantity of 1.4% by weight of the dough (or in a quantity of 3% in proportion to the weight of the flour).

Next, extra virgin olive oil is added in a quantity of 2.8% by weight of the dough (or in a quantity of 6% in proportion to the weight of the flour) and the dough is subjected to a second mixing to obtain a liquid or substantially liquid dough.

This liquid dough is then poured into suitable baking trays, and if necessary, smoothed out by light mechanical action in order to completely fill the space delimited by the tray, and allowed to rise in a suitable proofing room in a controlled atmosphere.

After that, a tomato sauce is spread over the top of the dough. The tomato sauce is well supported by the dough and does not sink into it. The dough topped in this way is then baked in a suitable oven.

After that, the dough is again topped, this time with mozzarella in pieces, and baked to completion.

The result is a pizza with a soft, spongy body, in particular, with alveoli larger than 0.2 cm, and with crunchy edge and bottom. This example 5 is not part of present invention.

### Example 6

Using the method described above, a dough is prepared which comprises soft wheat flour type "0" (W =430), in a quantity of 44.9% by weight of the dough, mixed with dough enhancer, comprising a dried base of acid soft wheat flour paste, gluten, L-ascorbic acid and alpha-amylase, in a total quantity of 0.4% by weight of the dough (or in a quantity of 1 % in proportion to the weight of the flour) and malt extract or malted cereal flour in a quantity of 0.4% by weight of the dough (or in a quantity of 0.9% in proportion to the weight of the flour).

These powder ingredients are then mixed and brewer's yeast is added in a quantity of 0.8% by weight of the dough (or in a quantity of 1.7% in proportion to the weight of the flour).

Water is then added in a quantity of 49.4% by weight of the dough (or in a quantity of 110% in proportion to the weight of the flour) and mixed in to obtain a liquid or substantially liquid dough to which salt is added in a quantity of 1.3% by weight of the dough (or in a quantity of 3% in proportion to the weight of the flour).

Next, extra virgin olive oil is added in a quantity of 2.7% by weight of the dough (or in a quantity of 6% in proportion to the weight of the flour) and the dough is subjected to a second mixing to obtain a liquid or substantially liquid dough.

This liquid dough is then poured into suitable baking trays, and if necessary, smoothed out by light mechanical action in order to completely fill the space delimited by the tray, and allowed to rise in a suitable proofing room in a controlled atmosphere for 2 hours.

After that, a tomato sauce is spread over the top of the dough. The tomato sauce is well supported by the dough and does not sink into it. The dough topped in this way is then baked in a suitable oven.

After that, the dough is again topped, this time with mozzarella in pieces, and baked to completion.

The result is a pizza with a soft, spongy body, in particular, with alveoli larger than 0.2 cm, and with crunchy edge and bottom. This example 6 is not part of present invention.

### Example 7

Using the method described above, a dough is prepared which comprises soft wheat flour type "0" (W =430), in a quantity of 45.3% by weight of the dough.

Brewer's yeast is then added in a quantity of 0.8% by weight of the dough (or in a quantity of 1.7% in proportion to the weight of the flour).

Water is then added in a quantity of 49.8% by weight of the dough (or in a quantity of 110% in proportion to the weight of the flour) and mixed in to obtain a liquid or substantially liquid dough to which salt is added in a quantity of 1.4% by weight of the dough (or in a quantity of 3% in proportion to the weight of the flour).

Next, extra virgin olive oil is added in a quantity of 2.7% by weight of the dough (or in a quantity of 6% in proportion to the weight of the flour) and the dough is subjected to a second mixing to obtain a liquid or substantially liquid dough.

This liquid dough is then poured into suitable baking trays, and if necessary, smoothed out by light mechanical action in order to completely fill the space delimited by the tray, and allowed to rise in a suitable proofing room in a controlled atmosphere for 2 hours.

After that, a tomato sauce is spread over the top of the dough. The tomato sauce is well supported by the dough and does not sink into it. The dough topped in this way is then baked in a suitable oven.

After that, the dough is again topped, this time with mozzarella in pieces, and baked to completion.

The result is a pizza with a soft, spongy body, in particular, with alveoli larger than 0.2 cm, and with crunchy edge and bottom.

Other examples are easy to imagine. In particular, processes and packaged products are imaginable where some of the above ingredients are not used. For example, examples are imaginable where the malt and/or the dough enhancer are not used. This example 7 is not part of present invention.

### Example 8

Using the method described above, a dough is prepared which comprises soft wheat flour type "0" (W =250), in a quantity of 49.3% by weight of the dough, mixed with dough enhancer, comprising a dried base of acid soft wheat flour paste, gluten, L-ascorbic acid and alpha-amylase, in a total quantity of 0.5% by weight of the dough (or in a quantity of 1 % in proportion to the weight of the flour) and malt extract or malted cereal flour in a quantity of 0.4% by weight of the dough (or in a quantity of 0.9% in proportion to the weight of the flour).

The powder ingredients are then mixed and water is added in a quantity of 45.3% by weight of the dough (or in a quantity of 92% in proportion to the weight of the flour) and mixed in to obtain a liquid or substantially liquid dough to which salt is added in a quantity of 1.5% by weight of the dough (or in a quantity of 3% in proportion to the weight of the flour).

Next, extra virgin olive oil is added in a quantity of 3% by weight of the dough (or in a quantity of 6% in proportion to the weight of the flour) and the dough is subjected to a second mixing to obtain a liquid or substantially liquid dough whose consistency, measured with a Brookfield rotating viscometer, is 5500 mPa*s (cP) (50rpm, impeller R5, temperature 20°C) and 3900 mPa*s (cP) (100rpm, impeller R5, temperature 20°C).

This liquid dough is then packaged to make a packaged product to which the end consumer can add brewer's yeast in a quantity of 0.8% by weight of the dough (or in a quantity of 1.7% in proportion to the weight of the flour), the yeast being provided in a separate container.

Obviously, other examples of the packaged product where the dough is liquid or substantially liquid may be provided based on the example embodiments from 5 to 7 described above but without adding the yeast to the dough.

Alternatively, the processes described in the above examples might be used to obtain a packaged product where the yeast is added directly to the packaged liquid dough.

The invention described above is susceptible of industrial application.

## Claims

1. A packaged product for making a flour-based food product, the packaged product (51') comprising a dough (11') for obtaining or defining a bakery product; the dough (11') is in liquid or substantially liquid condition, that is, it is in the form of a fluid and flowable mass and it is to be poured onto respective supporting means on which spreads by gravity in the space at its disposal; the dough containing grain flour and water; **characterized in that** the flour is in an amount of between 44.5% and 50.5% by weight of the dough, with that said flour that has a strength greater than or equal to 220 W measured according to the Chopin alveograph; **in that** the water is in an amount of between 44.5% and 50.9% by weight of the dough, in such a way that the dough has a viscosity, measured with a Brookfield rotating viscometer, that is between 47,000 mPa*s (cP) and 800 mPa*s (cP), at 50 rpm, with impeller R7 and R3 respectively, or between 36,000 mPa*s (cP) and 600 mPa*s (cP), at 100 rpm, with impeller R7 and R3, respectively, all at a temperature of 20° C; and **in that** the bakery product is pizza or focaccia.

2. The product according to claim 1, **characterized in that** the dough contains cooking salt, or sodium chloride, in particular in an amount less than or equal to 1.8% by weight of the dough, preferably between 0.5% and 1.8% by weight of the dough.

3. The product according to any of the preceding claims, **characterized in that** the dough contains oil and/or cooking fat, or a mixture of oils and/or cooking fats.

4. The product according to claim 3, **characterized in that** the dough contains olive oil, preferably extra virgin olive oil.

5. The product according to claim 3 or 4, **characterized in that** the amount of oil and/or cooking fat or the mixture of oils and/or cooking fats is up to a maximum of 5.7% by weight of the dough, and is preferably between 1.9% and 3.9% by weight of the dough.

6. The packaged product according to any of the preceding claims, **characterized in that** the dough contains malt extract or malted cereal flour; in particular, the malt extract or malted cereal flour being in an amount of up to a maximum of 0.6% by weight of the dough.

7. The packaged product according to any of the preceding claims, **characterized in that** the dough contains a dough enhancer; in particular, the dough enhancer being in an amount of up to a maximum of 0.6% by weight of the dough.

8. The packaged product according to claim 7, **characterized in that** the dough enhancer comprises a dried base of acid flour paste, in particular of soft grain flour, gluten, L-ascorbic acid, alpha-amylase.

9. The packaged product according to any of the preceding claims, **characterized in that** the liquid or substantially liquid dough (11') is placed in a suitable container (51').

10. The packaged product according to any of the preceding claims, **characterized in that** the dough comprises a leavener (11"), separate from the liquid or substantially liquid dough (11').

11. The product according to any of the preceding claims, **characterized in that** it comprises a leavener which is, in particular, in the form of brewer's yeast, natural yeast, or chemical leavening or a mixture of two or more of these.

12. The product according to claim 10 or 11, **characterized in that** the leavener is, in particular, in an amount of up to a maximum of 1.8% by 30 weight of the dough, and is preferably in an amount of between 0.6% and 0.8% by weight of the dough.

13. The product according to claim 11 or 12, when the same claims are not dependent from previous claim 10, **characterized in that** the leavener (11") is mixed in the packaged dough.

## Patentansprüche

1. Verpacktes Produkt zur Herstellung eines Lebensmittelprodukts auf Mehlbasis, wobei das verpackte Produkt (51') einen Teig (11') umfasst, um ein Backprodukt zu erhalten oder zu definieren; der Teig (11') befindet sich in einem flüssigen oder im wesentlichen flüssigen Zustand, d. h. in Form eines Fluides und einer Fluidmasse, und muss auf entsprechende Trägermittel gegossen werden, auf denen er sich durch Schwerkraft in dem ihr zur Verfügung stehenden Raum ausbreitet; der Teig enthält Weizenmehl und Wasser; **dadurch gekennzeichnet, dass** das Mehl in einer Menge zwischen 44,5 und 50,5 Gew.-% des Teigs vorliegt, wobei das Mehl einen Widerstand von mindestens 220 W aufweist, gemessen nach dem Chopin-Alveographen: wobei das Wasser in einer Menge zwischen 44,5 und 50,9 Gew.-% des Teigs vorliegt, so dass der Teig eine Viskosität hat, die, gemessen mit einem Brookfield-Rotationsviskosimeter, zwischen 47.000 mPa*s (cP) und 800 mPa*s (cP) bei 50 g/min mit einem Antrieb R7 bzw. R3 oder zwischen 36.000 mPa*s (cP) und 600 mPa*s (cP) bei 100 g/min mit einem Antrieb R7 bzw. R3, vorliegt, das alles bei einer Temperatur von 20°C; und dass das Backprodukt eine Pizza oder eine Focaccia ist.

2. Produkt nach Anspruch 1, **dadurch gekennzeichnet, dass** der Teig Kochsalz oder Natriumchlorid enthält, insbesondere in einer Menge gleich oder weniger als 1,8 Gew.-% des Teiges, vorzugsweise zwischen 0,5 Gew.-% und 1,8 Gew.-% des Teiges.

3. Produkt nach einem der vorhergehenden Ansprüche, **dadurch gekennzeichnet, dass** der Teig Speiseöl und/oder Fett oder eine Mischung aus Speiseölen und/oder Fetten enthält.

4. Produkt nach Anspruch 3, **dadurch gekennzeichnet, dass** der Teig Nudeln Olivenöl, vorzugsweise natives Olivenöl extra enthält.

5. Produkt nach Anspruch 3 oder 4, **dadurch gekennzeichnet, dass** die Menge an Speiseöl und/oder Fett oder die Mischung aus Speiseölen und/oder Fetten maximal 5,7 Gew.-% des Teiges, und vorzugsweise zwischen 1,9 Gew.-% und 3,9 Gew.-% des Teiges, beträgt.

6. Verpacktes Produkt gemäß einem der vorhergehenden Ansprüche, **dadurch gekennzeichnet dass** der Teig Malzextrakt oder mit Malz behandeltes Getreidemehl enthält; insbesondere ist der mit Malz behandelte Malzextrakt oder Getreidemehl in einer maximalen Menge von 0,6 Gew.-% des Teiges vorhanden.

7. Verpacktes Produkt nach einem der vorhergehenden Ansprüche, **dadurch gekennzeichnet, dass** der Teig eine Teigverstärker enthält, insbesondere ist der Teigverstärker in einer maximalen Menge von 0,6 Gew.-% des Teiges vorhanden ist.

8. Verpacktes Produkt nach Anspruch 7, **dadurch gekennzeichnet, dass** der Teigverstärker eine getrocknete Basis einer sauren Mehlpaste, insbesondere Weichweizenmehl, Gluten, L-Ascorbinsäure, Alpha-Amylase, umfasst.

9. Verpacktes Produkt nach einem der vorhergehenden Ansprüche, **dadurch gekennzeichnet, dass** der flüssige oder im wesentlichen flüssige Teig (11') in einen geeigneten Behälter (51') gegeben wird.

10. Verpacktes Produkt nach einem der vorhergehenden Ansprüche, **dadurch gekennzeichnet, dass** der Teig eine Hefe (11") umfasst, die von dem flüssigen oder im wesentlichen flüssigen Teig (11') getrennt ist.

11. Produkt nach einem der vorhergehenden Ansprüche, **dadurch gekennzeichnet ist, dass** es eine Hefe umfasst, die insbesondere in Form von Bierhefe, natürlicher Hefe oder chemischer Hefe oder einer Mischung von zwei oder mehr davon vorliegt.

12. Produkt nach Anspruch 10 oder 11, **dadurch gekennzeichnet, dass** die Hefe insbesondere in einer maximalen Menge von 1,8 Gew.-% des Teiges und vorzugsweise zwischen 0,6 Gew.-% und 0,8 Gew.-% des Teiges, vorliegt.

13. Produkt nach Anspruch 11 oder 12, wenn dieselben Ansprüche nicht von dem vorhergehenden Anspruch 10 abhängig sind, **dadurch gekennzeichnet, dass** die Hefe (11") in dem verpackten Teig gemischt ist.

## Revendications

1. Produit emballé pour fabriquer un produit alimentaire à base de farine, le produit emballé (51') comprenant une pâte (11') pour obtenir ou définir un produit cuit; la pâte (11') est à l'état liquide ou sensiblement liquide, c'est-à-dire sous la forme d'un fluide et d'une masse fluide et doit être versée sur des moyens de support respectifs sur lesquels elle s'étale par gravité dans l'espace à sa disposition; les pâtes contiennent de la farine de blé et de l'eau; **caractérisé en ce que** la farine est présente en une quantité comprise entre 44,5% et 50,5% en poids de la pâte, tandis que la farine a une résistance supérieure ou égale à 220 W mesurée selon l'alvéographe Chopin: l'eau a une quantité comprise entre 44,5% et 50,9% en poids de la pâte, de sorte que les pâtes ont une viscosité, mesurée avec un viscosimètre rotatif Brookfield, entre 47.000 mPa*s (cP) et 800 mPa*s (cP) à 50 g/min, avec un propulseur R7 et R3 respectivement, ou entre 36.000 mPa*s (cP) et 600 mPa*s (cP) à 100 g/min avec un propulseur R7 et R3, respectivement, le tout à une température de 20°C; et que le produit cuit est une pizza ou une focaccia.

2. Produit selon la revendication 1, **caractérisé en ce que** les pâtes contiennent du sel de cuisine ou du chlorure de sodium, notamment en une quantité inférieure ou égale à 1,8% en poids des pâtes, de préférence entre 0,5% et 1,8% en poids des pâtes.

3. Produit selon l'une des revendications précédentes, **caractérisé en ce que** les pâtes contiennent de l'huile et/ou de la graisse de cuisson, ou un mélange d'huiles et/ou de graisses de cuisson.

4. Produit selon la revendication 3, **caractérisé en ce que** les pâtes contiennent de l'huile d'olive, de préférence de l'huile d'olive extra vierge.

5. Produit selon la revendication 3 ou 4, **caractérisé en ce que** la quantité d'huile et/ou de graisse de cuisson ou le mélange d'huiles et/ou de graisses de cuisson est égale à un maximum de 5,7% en poids des pâtes, et elle est de préférence comprise entre 1,9% et 3,9% en poids des pâtes.

6. Produit emballé selon l'une des revendications précédentes, **caractérisé en ce que** les pâtes contiennent de l'extrait de malt ou de la farine de céréales traitée au malt; en particulier, l'extrait de malt ou la farine de céréales traitée au malt est présent en quantité maximale de 0,6% en poids des pâtes.

7. Produit emballé selon l'une des revendications précédentes, **caractérisé en ce que** les pâtes contiennent une rehausseur de pâte, en particulier le rehausseur de pâte étant présent en une quantité maximale de 0,6% en poids des pâtes.

8. Produit emballé selon la revendication 7, **caractérisé en ce que** le rehausseur de pâte comprend une base séchée d'une pâte de farine aigre, notamment farine de blé tendre, gluten, acide L-ascorbique, alpha amylase.

9. Produit emballé selon l'une des revendications précédentes, **caractérisé en ce que** la pâte liquide ou sensiblement liquide (11') est placée dans un récipient approprié (51').

10. Produit emballé selon l'une des revendications précédentes, **caractérisé en ce que** la pâte comprend une levure (11"), séparée de la pâte liquide ou sensiblement liquide (11').

11. Produit selon l'une des revendications précédentes, **caractérisé en ce qu'**il comprend une levure qui se présente notamment sous forme de levure de bière, de levure naturelle, ou de levure chimique ou un mélange de deux ou plusieurs d'entre elles.

12. Produit selon la revendication 10 ou 11, **caractérisé en ce que** la levure est présente notamment en une quantité maximale de 1,8% en poids de la pâte, et est de préférence comprise entre 0,6% et 0,8% en poids des pates.

13. Produit selon la revendication 11 ou 12, lorsque les mêmes revendications ne dépendent pas de la revendication 10 précédente, **caractérisé en ce que** la levure (11") est mélangée dans les pâtes emballées.
